Europäisches Patentamt

European Patent Office

Office européen des brevets

(19)

(11) **EP 0 827 255 A1**

(12) **DEMANDE DE BREVET EUROPEEN**

(43) Date de publication:
**04.03.1998 Bulletin 1998/10**

(51) Int Cl.⁶: **H02J 13/00**

(21) Numéro de dépôt: **97410095.0**

(22) Date de dépôt: **27.08.1997**

(84) Etats contractants désignés:
**AT BE CH DE DK ES FI FR GB GR IE IT LI LU MC NL PT SE**

(30) Priorité: **03.09.1996 FR 9610980**

(71) Demandeur: **SCHNEIDER ELECTRIC SA**
**92100 Boulogne Billancourt (FR)**

(72) Inventeurs:
- **Tian, Simon**
  **38050 Grenoble Cedex 09 (FR)**
- **Kasbarian, Jean-Marc**
  **38050 Grenoble Cedex 09 (FR)**

(74) Mandataire: **Jouvray, Marie-Andrée et al**
**Schneider Electric SA,**
**Sce. Propriété Industrielle**
**38050 Grenoble Cédex 09 (FR)**

(54) **Dispositif de détection préventive de défauts avec reconnaissance du type de charge**

(57)     Le dispositif comporte un interrupteur électronique (6) pouvant connecter temporairement une charge (5) à un réseau d'alimentation alternatif, de manière à appliquer à la charge la tension du réseau (Vr) pendant une phase d'essai correspondant à une alternance de la tension du réseau. Un circuit de contrôle (7) de l'interrupteur électronique (6) mesure le courant (Is) et la tension (Vs) de sortie du dispositif et calcule l'impédance de charge. Il compare l'évolution de l'impédance de charge pendant la phase d'essai à des courbes représentatives de différents types de charge. Le dispositif réalise une détection préventive de surcharge par une estimation de la puissance nominale de la charge fonction du type de charge détecté.

Fig. 1

**EP 0 827 255 A1**

## Description

L'invention concerne un dispositif de détection préventive de défauts dans une charge connectée à un réseau d'alimentation électrique alternatif par l'intermédiaire d'un premier interrupteur, dispositif comportant des moyens de contrôle du premier interrupteur, les moyens de contrôle comportant des moyens de détection du type de charge et des moyens de détection de défaut avec des moyens d'essai pour connecter temporairement la charge à des moyens d'alimentation d'essai, et des moyens de mesure du courant dans la charge.

Un dispositif connu (EP-A-581078) comporte un circuit optique de détection de la connexion d'une fiche dans une prise connectée au réseau électrique. Il réalise ensuite une détection de défauts par mesure du courant dans la charge lorsque celle-ci est alimentée sous une faible puissance, soit par un générateur d'impulsions, soit par le réseau par l'intermédiaire d'un transformateur-abaisseur. Ce document indique qu'il est possible de détecter le type de charges, plus particulièrement le fait que la charge soit purement dissipative ou non, à partir de la mesure du courant lorsque l'alimentation d'essai est constituée par un générateur d'impulsions. Il ne fournit cependant aucun détail sur la manière dont cette détection est réalisée. En pratique, le dispositif décrit ne permet pas réellement une reconnaissance de la nature de la charge et la détection de défauts n'est pas adaptée au type de charge.

L'invention a pour but un dispositif permettant une identification réelle de la nature de la charge, de manière à permettre une détection préventive de défauts satisfaisante pour tout type de charge et notamment pour les charges non linéaires.

Ce but est atteint par le fait que le premier interrupteur comporte un interrupteur électronique pouvant être fermé temporairement par les moyens de contrôle, de manière à appliquer à la charge la tension alternative du réseau pendant une première phase d'essai correspondant à une alternance de ladite tension, les moyens de contrôle comportant des moyens de mesure de la tension de sortie du premier interrupteur, les moyens de détection du type de charge comportant des moyens de calcul d'impédance, connectés aux moyens de mesure du courant et de la tension, et des moyens de comparaison de l'évolution de l'impédance pendant la première phase d'essai à des courbes d'impédance prédéterminées représentatives de différents types de charge.

L'analyse de la tension et du courant de sortie sous pleine tension, c'est à dire à la tension nominale du réseau, pendant une alternance permet une reconnaissance du type de charge.

Selon un développement de l'invention les moyens de comparaison comportent des moyens de détermination des signes d'une pluralité de valeurs représentatives de la dérivée de l'impédance par rapport au temps pendant la première phase d'essai, et des moyens de comparaison desdits signes à des successions prédéterminées de signes représentatives des courbes d'impédance des différents types de charge.

Selon un autre développement de l'invention, les moyens de détection de défaut comportent des moyens de détection d'une surcharge comportant des moyens d'estimation de la puissance nominale de la charge adaptés au type de charge détectée, des moyens de comparaison de la puissance nominale estimée à un seuil de puissance prédéterminé, représentatif de la puissance disponible en sortie du dispositif, et des moyens de signalisation d'une surcharge si la puissance nominale estimée excède le seuil de puissance.

La détection d'une surcharge est ainsi corrélée au type de charge détectée. Pour une charge non-linéaire, le comportement de la charge en régime transitoire, ou à froid, n'est pas représentatif de son comportement permanent, sous tension nominale. Cependant, pour un type de charge déterminé, il est possible d'estimer le comportement nominal de la charge, à partir de la détermination des caractéristiques transitoires, ou à froid, de la charge, réalisée grâce à des mesures effectuées pendant une période d'essai. On peut ensuite détecter la présence éventuelle d'un défaut dû à une surcharge à partir du comportement nominal estimé.

Selon le type de charge détecté, la détermination des caractéristiques à froid de la charge est réalisée soit à partir de mesures réalisées pendant la première phase d'essai, pendant laquelle la charge est alimentée sous pleine tension pendant une alternance, soit pendant une seconde phase d'essai, pendant laquelle la charge est alimentée sous une faible puissance.

Selon un mode de réalisation préférentiel, pendant la seconde phase d'essai les moyens de contrôle ferment temporairement l'interrupteur électronique de manière à appliquer à la charge la tension alternative du réseau pendant une durée limitée du cycle de la tension du réseau, de manière à ce que la tension instantanée appliquée à la charge reste inférieure à une tension pic prédéterminée très inférieure à la tension crête du réseau.

Le dispositif comporte également, de préférence, des moyens de détection du court-circuit comportant des moyens de comparaison à un seuil de courant prédéterminé du courant mesuré dans la charge pendant la seconde phase d'essai.

Il peut de plus comporter des moyens de détection d'un défaut différentiel comportant des moyens de mesure de courant différentiel dans la charge pendant la seconde phase d'essai, des moyens de comparaison du courant différentiel à un seuil de courant différentiel prédéterminé, et des moyens de signalisation d'un défaut différentiel si le courant différentiel mesuré excède le seuil de courant différentiel..

Selon un autre développement de l'invention, le dispositif comporte des moyens de mise en service de la charge comportant un second interrupteur connecté, en série avec une résistance de forte valeur, en parallèle sur le premier interrupteur, des moyens de fermeture du second interrupteur pendant une phase d'essai préalable pendant laquelle le premier interrupteur est ouvert , des moyens de comparaison de la tension de sortie du premier interrupteur à un seuil de tension prédéterminé , les moyens de contrôle effectuant la détection du type de charge et la détection de défaut, si la tension de sortie pendant la phase d'essai préalable est inférieure ou égale audit seuil de tension

D'autres avantages et caractéristiques ressortiront plus clairement de la description suivante de différents modes de réalisation de l'invention, donnés à titre d'exemples non limitatifs et représentés aux dessins annexés dans lesquels :

Les figures 1 et 2 représentent, sous forme de schéma-blocs, deux modes particuliers de réalisation d'un dispositif selon l'invention.

La figure 3 illustre une variante du dispositif selon la figure 2.

La figure 4 représente un autre mode particulier de réalisation de l'interrupteur électronique des dispositifs selon les figures 1 à 3.

La figure 5 représente un mode particulier de réalisation d'un organigramme de fonctionnement du circuit de contrôle du dispositif selon les figures 1 ou 3.

La figure 6 représente un schéma électrique équivalent du dispositif selon l'invention pendant la phase de détection de mise en service de la charge.

La figure 7 représente un schéma électrique équivalent du dispositif selon l'invention pendant les première et seconde phases d'essai.

Les figures 8a et 8b illustrent respectivement les formes d'onde des signaux A1 de commande de l'interrupteur électronique et de la tension Vs appliquée à la charge pendant la seconde phase d'essai dans le dispositif selon la figure 7.

Les figures 9a et 9b illustrent respectivement des variantes des signaux A1 et Vs lorsque l'interrupteur électronique est du type représenté à la figure 4.

Les figures 10a à 10d illustrent respectivement les formes d'onde des signaux A1, Vs, du courant Is de sortie et de l'impédance Zs de la charge, pendant la première phase d'essai.

Les figures 11a à 11e illustrent les variations de l'impédance Zs de la charge lors de l'application d'une première alternance de la tension du réseau, respectivement pour une charge constituée par une ampoule à incandescence, un convecteur, un moteur, un néon et une alimentation à découpage.

La figure 12 représente un mode particulier de réalisation de l'étape d'identification de la charge de la figure 5.

La figure 13 représente un mode particulier de réalisation de l'étape de détection de surcharge de la figure 5.

Les figures 14 à 17 représentent, plus en détail, un mode particulier de réalisation de l'étape de calcul de la puissance estimée de la figure 13, dans le cas où la charge détectée est, respectivement, un convecteur (fig 14), une ampoule à incandescence (fig 15), une lampe fluorescente (fig 16), un moteur ou une alimentation à découpage (fig 17).

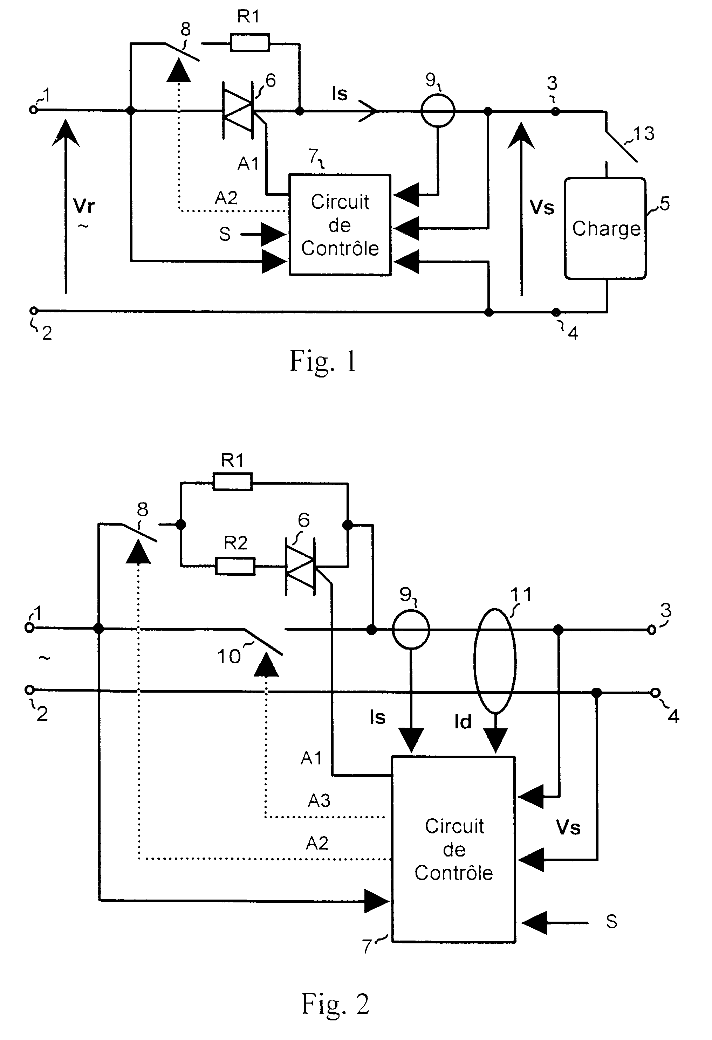

Comme représenté à la figure 1, le dispositif selon l'invention comporte deux bornes d'entrée 1 et 2, connectées à un réseau d'alimentation électrique alternatif. La tension Vr du réseau est donc appliquée entre les bornes 1 et 2. Le dispositif comporte deux bornes de sortie, 3 et 4, entre lesquelles peut être connectée une charge 5. Les bornes 2 et 4 sont connectées directement l'une à l'autre, tandis que les bornes 1 et 3 sont connectées par l'intermédiaire d'un premier interrupteur. Dans le mode de réalisation particulier de la figure 1, le premier interrupteur est constitué par un triac 6 recevant sur une électrode de commande des signaux A1 de commande d'un circuit de contrôle 7.

Un second interrupteur 8 est connecté, en série avec une résistance R1 de forte valeur, entre les bornes 1 et 3. L'interrupteur 8 est commandé par des signaux A2 de commande du circuit de contrôle 7. L'interrupteur 8 peut être constitué par un interrupteur électronique par exemple par un opto-triac, ou par le contact d'un relais mécanique à faible courant.

Le dispositif comporte un circuit de mesure du courant de sortie Is, par exemple constitué par un tore 9 connecté en amont de la borne de sortie 3. Le tore 9 fournit au circuit de contrôle 7 des signaux représentatifs du courant Is. La tension Vs de sortie du premier interrupteur, mesurée entre les bornes de sortie 3 et 4 est également appliquée à des entrées du circuit de contrôle 7.

Dans le mode de réalisation particulier représenté à la figure 2, le premier interrupteur comporte un interrupteur mécanique 10 connecté entre les bornes 1 et 3 et commandé par des signaux A3 de sortie du circuit de contrôle 7. Le premier interrupteur comporte également un triac 6, commandé par les signaux A1, connecté en série avec une résistance de protection R2 de faible valeur, en parallèle sur la résistance R1. Le premier interrupteur est, dans ce cas, constitué par la mise en parallèle, entre les bornes 1 et 3, de l'interrupteur 10 d'une part et du circuit série constitué par le second interrupteur 8, la résistance R2 et le triac 6 d'autre part.

Sur la figure 2, un circuit de mesure de courant différentiel, constitué par un tore différentiel 11 entourant les deux conducteurs disposés en amont des bornes de sortie 3 et 4, fournit au circuit de contrôle 7 des signaux représentatifs du courant différentiel Id dans la charge. Un circuit de mesure analogue peut également être prévu dans le mode de réalisation de la figure 1.

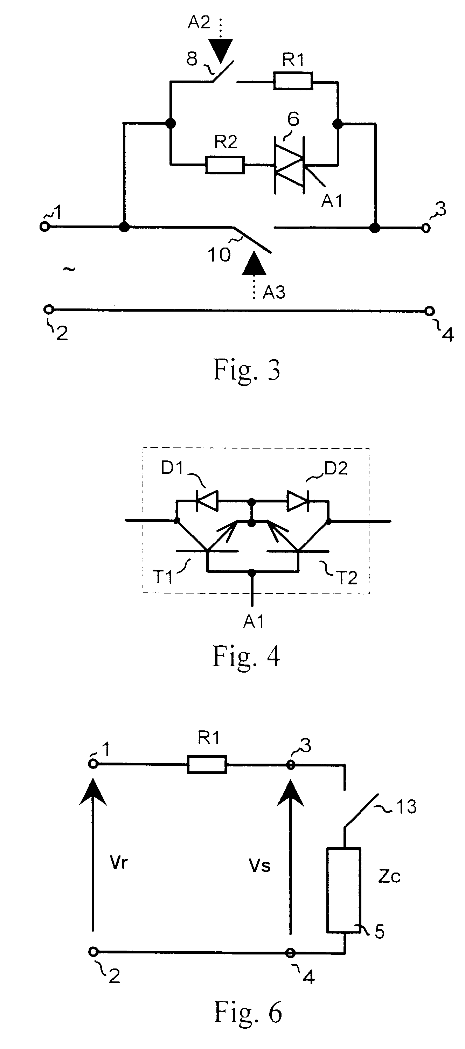

Dans la variante de réalisation de la figure 3, le circuit série constitué par le triac 6 et la résistance de protection R2 est connecté en parallèle sur l'interrupteur mécanique 10. Dans ce cas, le premier interrupteur est constitué par le mise en parallèle, entre les bornes 1 et 3, de l'interrupteur 10 d'une part et du circuit série constitué par le triac 6 et la résistance R2 d'autre part.

Le triac 6 des figures 1 à 3 peut être remplacé par tout interrupteur électronique approprié. Un mode particulier de réalisation d'un interrupteur électronique 12 est représenté à la figure 4. Il est constitué par deux transistors T1 et T2 dont les émetteurs sont connectés à un point commun et dont les bases sont connectées pour former l'électrode de commande de l'interrupteur, recevant les signaux A1 de commande. Les collecteurs de T1 et T2 constituent respectivement l'entrée et la sortie de l'interrupteur électronique 12. Les anodes de diodes D1 et D2 sont connectées aux émetteurs de T1 et T2, tandis que leurs cathodes sont respectivement connectées aux collecteurs de T1 et T2.

A titre d'exemple, la tension Vr du réseau est de l'ordre de 230 V, la résistance R1 de l'ordre de 100 kiloohms et la résistance R2 de l'ordre d'1 ohm.

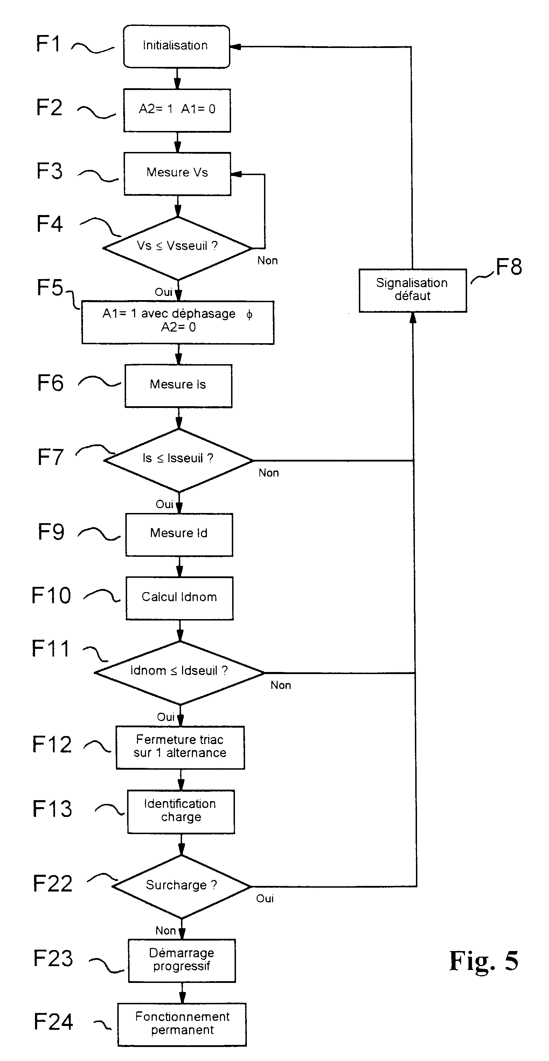

Le fonctionnement du dispositif selon l'invention va être décrit plus en détail ci-dessous en regard de l'organigramme de la figure 5 .

Le dispositif de détection préventive de défauts peut être intégré dans un disjoncteur ou dans une prise électrique commandable, dite prise intelligente. Dans le cas d'un disjoncteur, chaque enclenchement, manuel ou automatique, du disjoncteur provoque l'application au circuit de contrôle 7 d'un signal S d'initialisation. Dans le cas d'une prise c'est l'enfichage d'une fiche, pouvant être connectée à une grande diversité de charges de toute nature, qui provoque l'application du signal S d'initialisation au circuit de contrôle 7. A titre d'exemple, le signal S peut être produit par un circuit optique de détection de présence, du type de celui décrit dans le document EP-A-581078 précité.

Les interrupteurs 6, 8 et éventuellement 10, étant ouverts, l'application du signal S au circuit 7 provoque une étape d'initialisation (F1). Le circuit de contrôle 7 passe ensuite à une phase d'essai préalable, ou phase de détection de mise en service de la charge. En effet, la charge 5 peut, comme représenté à la figure 1, être connectée aux bornes de sortie 3 et 4 par un interrupteur 13 de mise en service. Tant que cet interrupteur est ouvert, la charge, bien que présente, n'est pas mise en service. Pour détecter cette mise en service, le circuit de contrôle procède (étape F2) à la fermeture du second interrupteur 8 en lui appliquant des signaux de commande de fermeture (A2=1 dans le mode réalisation représenté), tout en maintenant ouvert le premier interrupteur (A1 = 0 et éventuellement, pour la figure 2, de plus, A3 = 0).

Dans une étape F3, le circuit de contrôle 7 mesure la tension Vs de sortie, puis compare (étape F4) la tension mesurée à une tension de seuil Vsseuil. Lorsque Vs est inférieure ou égale à la tension de seuil, le circuit de contrôle considère que la charge est présente et que sa mise en service est commandée (interrupteur 13 fermé). Il passe alors (sortie oui de F4) à la phase suivante de détection de défaut de court-circuit. Par contre, tant que Vs reste supérieure au seuil (sortie non de F4), la charge n'est pas considérée comme mise en service (interrupteur 13 ouvert) et le circuit de contrôle se reboucle sur l'étape F3.

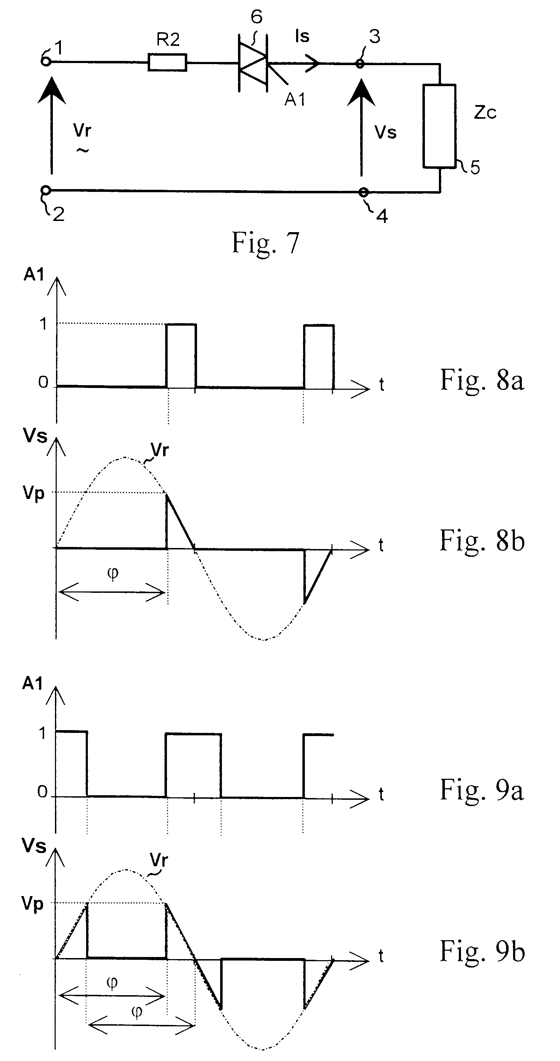

Le schéma électrique équivalent de la figure 6 représente les tensions électriques appliquées à l'entrée et à la sortie du circuit pendant la phase de détection de mise en service de la charge. L'interrupteur 8 étant fermé, la tension Vr du réseau est appliquée aux bornes d'un circuit comportant, en série, la résistance R1, l'interrupteur 13 et la charge 5 d'impédance Zc. Tant que l'interrupteur 13 est ouvert, la tension de sortie Vs est égale à la tension Vr du réseau. La résistance R1 ayant une valeur élevée, le courant de court-circuit est dans tous les cas limité à une valeur faible, non dangereuse. Lorsque la charge est mise en service par fermeture de l'interrupteur 13, la tension Vs baisse. Cette baisse est détectée par le circuit de contrôle 7 qui passe alors à la phase suivante.

A titre d'exemple non limitatif, si Vr=230 V et R1 = 100 kiloohms, le courant de court-circuit est limité à 2,3 mA et la puissance maximum dissipée dans la résistance est de 0,53 W. Si l'on suppose que toutes les charges pouvant être connectées à la prise ou au disjoncteur ont une puissance supérieure à 3 W, c'est-à-dire une résistance de charge inférieure ou égale à 17,6 kiloohms, alors la tension de seuil Vsseuil est fixée à :

$$Vsseuil = (230 \times 17,6)/(100 + 17,6) = 34,5 \text{ V}.$$

La phase de détection de défaut de court-circuit commence par une étape F5 d'ouverture du second interrupteur 8 (A2=0) et de fermeture, ou mise en conduction, temporaire de l'interrupteur électronique (6 ou 12) pour appliquer à la charge la tension du réseau pendant une durée prédéterminée limitée du cycle de Vr, de manière à ce que la tension instantanée Vs appliquée à la charge reste inférieure à une tension pic Vp prédéterminée très inférieure à la tension crête du réseau. De cette manière, la charge 5 est alimentée pendant cette phase sous une faible puissance. Pour cela les signaux de commande A1 sont des signaux logiques qui commandent la fermeture de l'interrupteur électronique avec un déphasage prédéterminé par rapport au passage à zéro de la tension Vr du réseau.

Pour assurer la synchronisation des signaux A1 sur la tension du réseau, celle-ci est appliquée à une entrée du circuit de contrôle 7 (figs 1 et 2).

La figure 7 représente le schéma électrique équivalent du circuit pendant la phase de détection de défaut. Dans les modes de réalisation des figures 1 et 3, le second interrupteur 8 étant ouvert, la charge 5, d'impédance Zc, est connectée à la borne 1 par R2 et le triac 6, commandé par les signaux A1. Dans le cas de la figure 2, le second interrupteur 8 étant en série avec le triac 6, les signaux A2 de commande doivent rester à leur valeur logique 1 pendant la phase de détection de défaut, et la résistance R1 est alors en parallèle sur l'ensemble constitué par R2 et le triac 6 dans le schéma de la figure 7. Cependant, les valeurs respectives de R1 et R2 sont telles que la résistance R1 ne joue aucun rôle et la description qui va suivre est, en conséquence, valable aussi bien pour le mode de réalisation de la figure 2 que pour les modes de réalisation des figures 1 et 3.

Dans le cas d'un triac 6, les signaux A1 sont, de préférence, tels que représentés à la figure 8a, ce qui fournit en sortie des signaux Vs tels que représentés à la figure 8b. Sur la figure 8b la tension Vr du réseau est représentée en pointillé. Une impulsion A1 de valeur logique 1 est appliquée à l'électrode de commande du triac avec un déphasage ø par rapport à chaque passage zéro de la tension Vr du réseau. Le triac est donc conducteur pendant un court instant de chaque alternance, entre l'application de l'impulsion A1 et le passage à zéro suivant de Vr, la tension instantanée Vs restant, en valeur absolue, inférieure à la tension pic Vp (fig 8b).

Pour une valeur efficace de 230 V de la tension Vr du réseau, la tension pic Vp est de préférence inférieure à 50 V. Dans un mode de réalisation préférée Vp = 20 V. L'angle ø de déphasage peut alors être calculé par l'équation :

$$Vp = \sqrt{2} \times 230 \times \sin ø$$

soit, ø = 176°, ce qui pour une fréquence du réseau de 50 Hz correspond à un déphasage de 9,8 ms. A titre d'exemple, si Vp = 20 V, pour que le courant dans le triac soit limité à 20A en cas de court-circuit, on choisit une résistance de protection R2 de 1 ohm.

Dans le mode de réalisation des figures 8a et 8b, deux fractions de sinusoïde de signes opposés sont appliquées à la charge. Ceci se justifie en présence de charges asymétriques. Par ailleurs, si l'interrupteur électronique est réalisé avec des transistors, comme sur la figure 4, les signaux A1 peuvent être du type représenté à la figure 9a. Dans ce cas A1 prend, comme précédemment, la valeur logique 1 après un déphasage ø. Cependant l'interrupteur ne s'ouvre pas automatiquement au passage à zéro de la tension du réseau, mais son ouverture ou blocage est commandée par le passage à la valeur logique zéro de A1, de préférence avec le même déphasage ø par rapport au passage à zéro suivant de Vr. On obtient ainsi pour Vs la forme d'onde représentée à la figure 9b.

L'étape F5 est suivie d'une étape F6 (fig 5) de mesure du courant Is dans la charge, puis d'une étape F7 de comparaison de Is à un seuil de courant Isseuil. Si le courant Is est inférieur ou égal au seuil de courant, cela est interprété comme une absence de court-circuit et le circuit de contrôle poursuit son programme d'essai. Par contre, si Is est supérieur au seuil de courant, alors (sortie non de F7) la charge est considérée comme présentant un court-circuit. Le circuit de contrôle passe alors à une étape F8 de signalisation de défaut, signalant le court-circuit, avant de revenir à l'étape F1.

A titre d'exemple, on peut prendre 5 ohms comme résistance limite de court-circuit pour la charge, ce qui correspond à une puissance supérieure à 10 kW. Dans ce cas le seuil de courant de détection de court-circuit est donné par l'équation :

$$Isseuil = Vp/ (Rcourt\text{-}circuit + R2)$$

soit

$$Isseuil = 20/(5+1) = 3,3 \text{ A.}$$

En l'absence de court-circuit détecté (sortie oui de F7), le circuit de contrôle passe alors à une phase de détection de défaut différentiel.

On considère qu'un courant différentiel de défaut varie linéairement avec la tension appliquée et, en conséquence, que le courant différentiel sous tension nominale peut être estimé par une mesure sous tension réduite.

La mesure du courant différentiel par le tore 11, peut s'effectuer soit avec le montage équivalent correspondant à la phase de détection de mise en service de la charge (fig 6) soit avec le montage équivalent correspondant à la phase de détection de défaut de court-circuit (figures 7 à 9). Sur la figure 5 c'est ce dernier cas qui est représenté. Les commandes A2 et A1 étant inchangées depuis l'étape F7, le circuit de contrôle mesure le courant différentiel Id pendant une étape F9. Puis il calcule le courant différentiel Idnom sous tension nominale pendant une phase F10 et compare Idnom à un seuil de courant différentiel Idseuil pendant une phase F11. Si Idnom est inférieur ou égal au seuil Idseuil, le circuit de contrôle considère qu'il n'y a pas de défaut différentiel et le circuit de contrôle poursuit son programme d'essai. Par contre, si Idnom est supérieur au seuil Idseuil, alors (sortie non de F11), un défaut différentiel est détecté et le circuit de contrôle passe à l'étape F8 de signalisation de défaut, signalant un défaut différentiel. A titre d'exemple, avec le montage des figures 5 et 7, pour une charge de 10 kW soit 5 ohms, la tension Vp minimale aux bornes de la charge est donnée par (20 x 5)/(5 + 1) = 16,7 V. Le courant différentiel sous tension nominale (230V) est donné par : Idnom = Id x 230/16,7. Le seuil de protection Idseuil est par exemple fixé à 30 mA.

Si le montage de la figure 6 est choisi, une étape équivalente à F2 est introduite entre F7 et F9, le calcul d'Idnom étant modifié en conséquence. Il est également possible de faire la détection de défaut différentiel avant la détection du court-circuit, les étapes F9 à F11 étant alors intercalées entre les étapes F4 et F5.

En l'absence de détection de défaut de court-circuit et de défaut différentiel (sortie oui de F11), le circuit de contrôle passe alors à une phase de détection de surcharge.

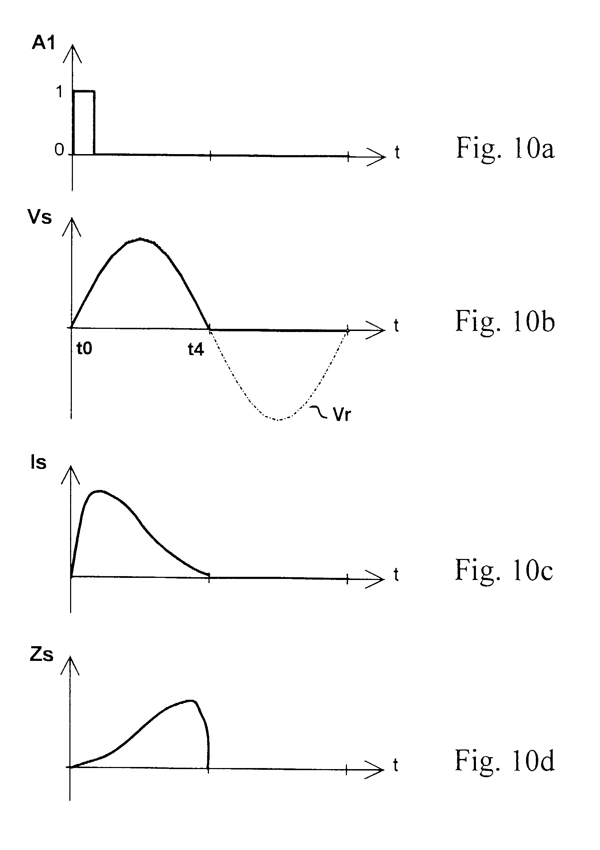

Pour détecter une surcharge, le circuit de contrôle identifie tout d'abord le type de charge qui a été connectée aux bornes de sorties 3 et 4 du dispositif. Pour cela l'interrupteur électronique (6,12) est fermé, c'est à dire rendu conducteur, pendant une alternance de la tension Vr du réseau (étape F12). Dans le cas d'un triac 6, les signaux A1 sont du type représenté sur la figure 10a. Une impulsion est appliquée lors d'un passage à zéro de Vr, rendant le triac 6 conducteur jusqu'au passage à zéro suivant de Vr (fig 10b). La charge 5 est ainsi alimentée sous pleine tension pendant une alternance de la tension du réseau, c'est à dire pendant ½ période de Vr, synchronisée au passage à zéro de la tension Vr. Il est à noter que la résistance R2 n'est plus suffisante pour protéger le triac 6 en cas de court-circuit. Cependant, la phase de détection d'un court-circuit a permis d'écarter cette éventualité avant de connecter la charge à pleine tension.

La forme de l'impédance d'une charge, linéaire ou non, lorsqu'une première alternance de tension du réseau lui est appliquée est caractéristique de la nature de cette charge. A titre d'exemple, les figures 10c et 10d illustrent le courant Is pendant une telle alternance et l'impédance Zs calculée correspondant aux grandeurs Is et Vs mesurées, la charge étant constituée par une ampoule à incandescence.

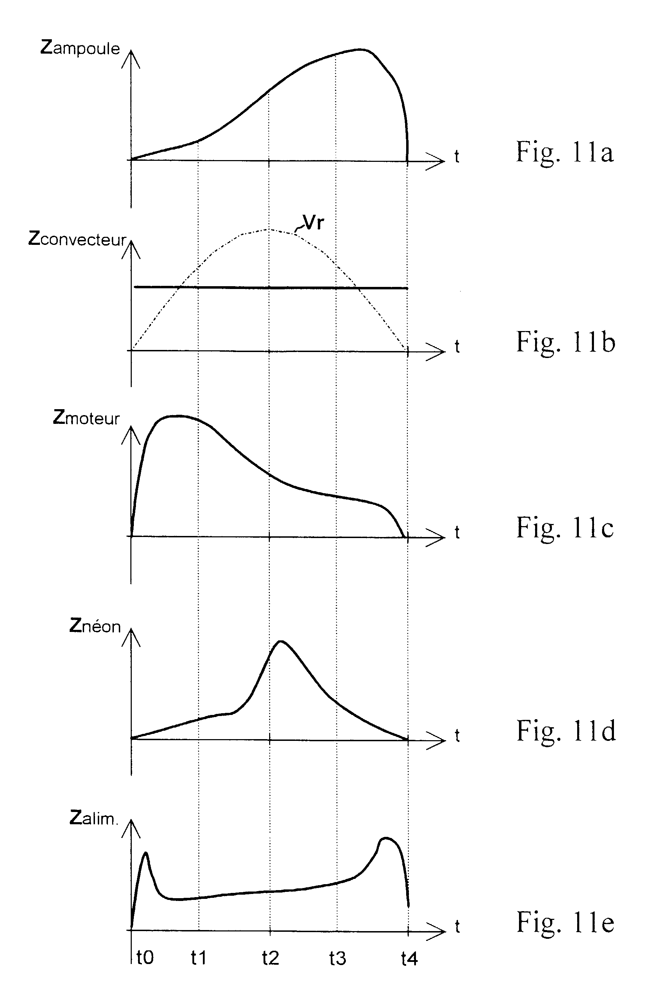

Les figures 11a à 11e illustrent les impédances caractéristiques sur une première alternance de tension nominale pour divers types de charge, à savoir une ampoule à incandescence (fig 11a), un convecteur (fig 11b), un moteur, par exemple un petit moteur d'aspirateur (fig 11c), une lampe fluorescente, par exemple un néon (fig 11d) et une alimentation à découpage, par exemple du type utilisé par un ordinateur ou une autre charge de type informatique (fig 11e).

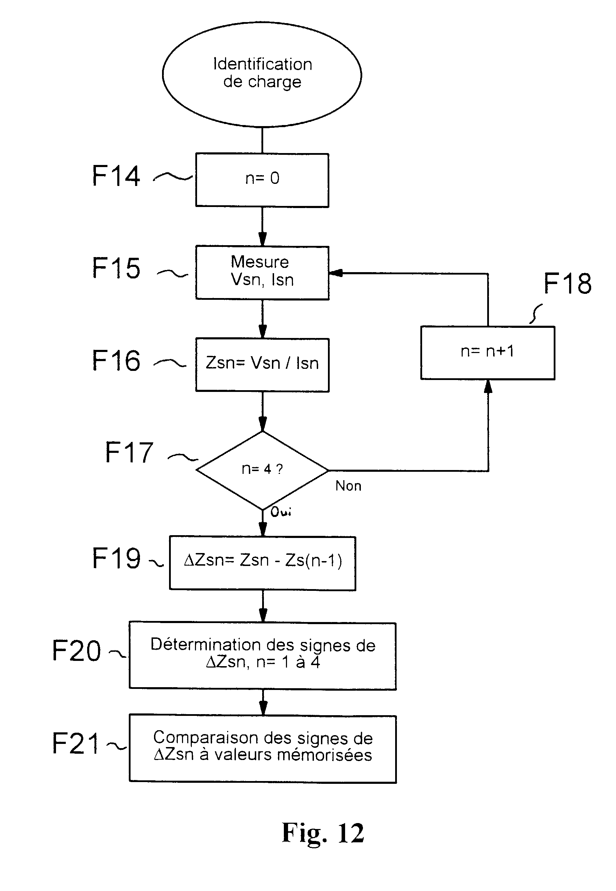

Un mode particulier de réalisation de l'étape F13 d'identification du type de charge est représenté à la figure 12. Dans ce mode de réalisation, le circuit de contrôle effectue cinq mesures Isn et Vsn du courant Is et de la tension Vs, avec n = 0 à 4, à des instants prédéterminés t0 à t4 de l'alternance de la tension du réseau pendant laquelle l'interrupteur électronique est conducteur.

Sur la figure 12, une étape F14 correspond à la mise à zéro de n. Puis les valeurs Vsn et Isn correspondantes sont mesurées et mises en mémoire dans une étape F15. L'impédance correspondante Zsn = Vsn/Isn est calculée en F16. Puis, à l'étape F17, la valeur de n est comparée à 4. Si n est différent de 4, le circuit de contrôle incrémente n dans une étape F18 : n = n + 1 avant de se reboucler sur la mesure de Isn et Vsn en F15.

Lorsque n = 4 (sortie oui de F17), le circuit de contrôle possède alors en mémoire 5 valeurs successives Zsn, n = 0 à 4, de l'impédance de charge calculée à partir des valeurs de Isn et Vsn mesurées pendant l'alternance t0 - t4 durant laquelle la tension du réseau a été appliquée à la charge.

Dans une étape F19, le circuit de contrôle calcule quatre valeurs successives ΔZsn = Zsn-Zs(n-1), avec n=1 à 4, correspondant à la différence entre deux valeurs consécutives de Zsn. Les quatre valeurs ΔZsn sont représentatives de la dérivée de l'impédance Zs calculée pendant quatre intervalles de temps successifs de l'alternance considérée.

Or l'évolution de l'impédance est caractéristique de la nature de la charge. Dans un mode de réalisation préférée, l'évolution de la dérivée calculée est comparée à l'évolution de la dérivée de courbes d'impédances représentatives de différents types de charge, mémorisées dans le circuit de contrôle et correspondant par exemple aux courbes des figures 11a à 11e.

En pratique l'étude de l'évolution du signe de la dérivée de l'impédance de charge sur l'alternance considérée est représentative du type de charge. Le tableau ci-dessous fournit l'évolution de ce signe sur les quatre intervalles de temps définis précédemment pour différents types de charge.

| charge | Intervalles de temps | | | |
|---|---|---|---|---|
| | t0-t1 | t1-t2 | t2-t3 | t3-t4 |
| ampoule à incandescence | + | + | + | + (ou -) |
| convecteur | 0 | 0 | 0 | 0 |
| moteur | + | - | - | - |
| néon | + | + | - | - |

(suite)

| charge | Intervalles de temps | | | |
|---|---|---|---|---|
| | t0-t1 | t1-t2 | t2-t3 | t3-t4 |
| alimentation à découpage | - | + | + | + |

Dans le mode de réalisation préférentiel de la figure 12, le circuit de contrôle détermine, en F20, les signes de $\Delta Zsn$, n = 1 à 4, puis en F21, compare leur succession à des valeurs mémorisées correspondant au tableau ci-dessus. La succession des signes permet d'identifier le type de charge.

L'analyse de l'évolution de l'impédance de charge calculée peut également être réalisée en utilisant les techniques de transformées de Fourier et comparaison aux transformées de Fourier de courbes représentatives des différents types de charge. Le nombre de mesures de Is et Vs pendant l'alternance peut être différent de 5. Cependant, dans la pratique, l'utilisation du signe de la dérivée est plus simple et suffisante pour distinguer les types de charge les plus courants.

Après identification de la nature de la charge, le circuit de contrôle passe à une étape F22 (fig 5) de détection d'une surcharge. Si une surcharge est détectée, il passe à l'étape F8 de signalisation de défaut, signalant la surcharge. Sinon (sortie non de F22), le circuit de contrôle passe, éventuellement par l'intermédiaire d'une étape F23 de démarrage progressif, à une étape F24 de fonctionnement permanent. Pendant l'étape F24 la tension Vr du réseau est appliquée en permanence à la charge 5, par l'intermédiaire du premier interrupteur, c'est à dire soit par l'intermédiaire du triac 6 (fig 1), soit par l'intermédiaire de l'interrupteur mécanique 10 (figs 2 et 3) auquel le circuit de contrôle 7 applique des signaux A3 non nuls.

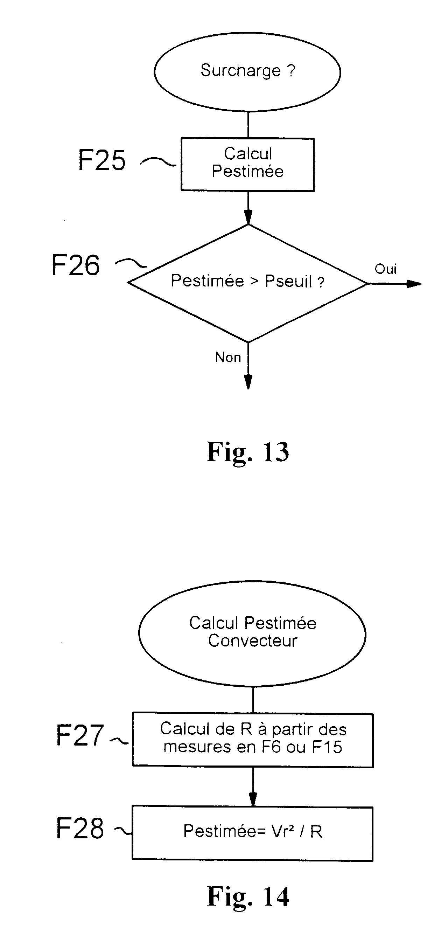

Pour la détection préventive d'une surcharge éventuelle, le circuit de contrôle tient compte de la nature de la charge qui vient d'être identifiée. Comme représenté à la figure 13, la détection de la surcharge commence par une étape F25 de calcul de la puissance nominale estimée Pestimée de la charge. Puis dans une étape F26 il compare Pestimée avec un seuil de puissance prédéterminé Pseuil qui correspond à la puissance nominale disponible à la sortie du dispositif, mise en mémoire dans le circuit de contrôle. Si la puissance estimée est supérieure au seuil de puissance, le circuit de contrôle considère qu'il y a surcharge. Sinon (sortie non de F26) il passe à l'étape de fonctionnement permanent F24, éventuellement après une étape de démarrage progressif F23 (fig 5).

L'estimation de la puissance nominale de la charge est adaptée au type de charge identifié précédemment par le circuit de contrôle. L'estimation est effectuée à partir des mesures du courant Is et de la tension Vs effectuées pendant les étapes précédentes. La nature de la charge détermine les mesures pouvant être utilisées.

Dans le cas d'un convecteur, l'impédance de la charge est constante (fig 11b) et identique à froid et à chaud. La tension Vr nominale du réseau (ex: 230 V) étant connue, la puissance nominale peut être calculée (fig 14) à partir de la valeur R de la résistance (impédance Zs) calculée (F27) à partir des mesures effectuées (en F15) pendant la phase d'identification de charge, par exemple à froid, au début (en t0) de l'alternance. La valeur de la résistance R du convecteur peut également être obtenue à partir de la mesure (en F6) du courant Is réalisée pendant la phase de détection de court-circuit (ø étant connu, Vp est connu). Pestimée est donnée par: Pestimée = $Vr^2/R$ comme représenté en F28.

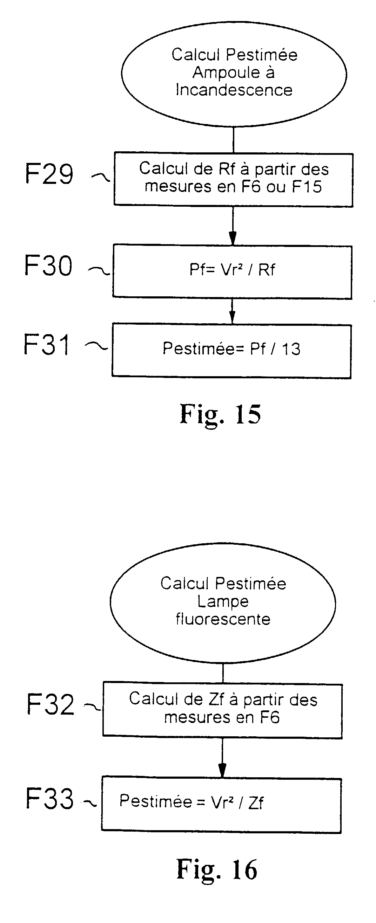

Dans le cas d'une ampoule à incandescence, la puissance nominale estimée est égale à 1/13 de la puissance à froid Pf, soit Pestimée = Pf/13 = $Vr^2/13Rf$, où Rf représente la résistance à froid du filament de l'ampoule. La valeur de Rf peut être calculée à partir des mesures réalisées en F15, au début (t0) de l'alternance, pendant la phase de détection de surcharge, ou en F6 pendant la phase de détection du court-circuit, lorsque la charge est alimentée sous faible puissance. Le calcul de Pestimée (F25) comporte donc (fig 15) une étape F29 de calcul de Rf, une étape F30 de calcul de Pf et une étape F31 de calcul de Pestimée.

Dans le cas d'une lampe fluorescente, par exemple un tube néon, celle-ci est généralement compensée par un condensateur dont la valeur est fonction du courant nominal. Pendant la phase de détection de court-circuit, le tube n'est pas amorcé et le courant Is mesuré pendant l'étape F6 est principalement le courant capacitif. Celui-ci permet d'obtenir (F32, fig 16) une mesure Zf de l'impédance à froid. La puissance nominale estimée Pestimée est ensuite calculée (en F33) à partir de Zf:

$$Pestimée = Vr^2/Zf = (230)^2/Zf.$$

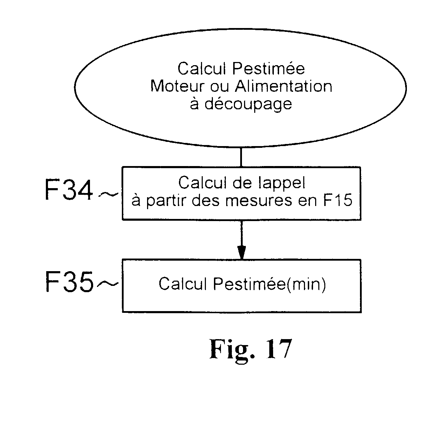

Dans le cas d'un moteur, le circuit de contrôle calcule (F34, fig 17) le courant d'appel Iappel à partir des valeurs de courant mesurées (en F15) pendant l'alternance t0 - t4 durant la phase d'identification de charge. Selon la puissance et le type de moteur, le courant d'appel sur la première alternance est compris entre 2 et 6 fois le courant nominal. On considère, en conséquence, que la puissance en fonctionnement permanent est comprise entre une puissance nominale minimale Pestimée(min) = Vr.Iappel/6, et une puissance nominale maximale Pestimée(max) = Vr.Iappel/2. Pour éviter des détections de défaut intempestives, le circuit de contrôle utilise pour la détection de surcharge comme valeur de puissance estimée la puissance nominale minimale estimée (F35).

Dans le cas d'une alimentation à découpage, le courant d'appel peut atteindre 10 à 20 fois le courant nominal. La puissance en fonctionnement permanent est donc comprise entre une puissance nominale minimale Pestimée (min) = Vr.Iappel/20 et une puissance nominale maximale Vr.Iappel/10. Comme dans le cas d'un moteur, c'est la puissance estimée minimale qui est calculée (F35) et utilisée pour la détection de surcharge.

La puissance réelle du moteur ou de l'alimentation à découpage peut être supérieure à la puissance estimée minimale. Si, dans ce cas, la puissance disponible est inférieure à la puissance réelle, il y aura surcharge lors de la mise en fonctionnement de la charge, surcharge non détectée au préalable par le dispositif. A titre d'exemple, si la puissance estimée est comprise entre 1 KW et 2 KW, une surcharge n'est détectée préventivement par le dispositif que si la puissance disponible est inférieure à la puissance estimée minimale, c'est à dire 1 KW, seule prise en compte par le dispositif. Si la puissance disponible est supérieure à 2 KW, il n'y aura pas de problème. Par contre si la puissance disponible est comprise entre les puissances estimées minimale et maximale, par exemple 1,5 KW, le dispositif considère qu'il n'y a pas surcharge alors que ce peut être le cas si la puissance réelle est supérieure à 1,5 KW. Le dispositif décrit ne permet pas de lever l'incertitude dans ce cas. Une telle solution est néanmoins acceptable car, dans tous les cas, une protection classique contre les défauts de court-circuit, de surcharge et de défaut différentiel est toujours prévue pour fonctionner pendant la phase de démarrage et en fonctionnement permanent.

A titre d'exemple, le démarrage progressif adopté peut consister en une commande de phase par triac pour une charge inductive ou en une commande par interruption de phase pour une charge capacitive.

L'invention n'est pas limitée aux seuls types de charge décrits ci-dessus, qui sont les charges les plus fréquemment rencontrées, mais s'étend à des charges de toute nature. Il suffit pour cela de mettre en mémoire dans le circuit de contrôle des grandeurs représentatives de la forme de la courbe d'impédance de ce type de charge lorsqu'une première alternance de tension lui est appliquée, pour pouvoir comparer à cette courbe les valeurs calculées à partir de grandeurs mesurées pendant la phase d'identification du type de charge.

La détection préventive de défauts, notamment d'un défaut différentiel, de court-circuit ou de surcharge, avant l'application d'une tension nominale du réseau sur une charge permet de réduire le nombre de manoeuvres d'un appareil de coupure disposé en amont et destiné à assurer la protection du réseau et/ou de la charge en fonctionnement permanent, c'est à dire d'assurer la sélectivité de l'ensemble et de réduire l'usure de l'appareil de coupure. De plus, cela permet d'améliorer la sécurité des personnes et du matériel. Cela rend également possible un réenclenchement automatique d'un appareil de coupure muni d'un tel dispositif, ce qui permet d'assurer une meilleure continuité de service.

## Revendications

1. Dispositif de détection préventive de défauts dans une charge (5) connectée à un réseau d'alimentation électrique alternatif par l'intermédiaire d'un premier interrupteur (6,10,12), dispositif comportant des moyens (7) de contrôle du premier interrupteur, les moyens (7) de contrôle comportant des moyens de détection du type de charge et des moyens de détection de défaut avec des moyens d'essai pour connecter temporairement la charge à des moyens d'alimentation d'essai, et des moyens de mesure du courant (Is) dans la charge, dispositif caractérisé en ce que le premier interrupteur comporte un interrupteur électronique (6,12) pouvant être fermé temporairement par les moyens de contrôle (7), de manière à appliquer à la charge (5) la tension alternative du réseau (Vr) pendant une première phase d'essai correspondant à une alternance (t0-t4) de ladite tension, les moyens de contrôle comportant des moyens de mesure de la tension (Vs) de sortie du premier interrupteur, les moyens (F13) de détection du type de charge comportant des moyens (F16) de calcul d'impédance (Zs) connectés aux moyens (F15) de mesure du courant et de la tension, et des moyens (F19-F21) de comparaison de l'évolution de l'impédance pendant la première phase d'essai à des courbes d'impédance prédéterminées (figs11a-11e) représentatives de différents types de charge.

2. Dispositif selon la revendication 1, caractérisé en ce que les moyens de comparaison comportent des moyens (F19, F20) de détermination des signes d'une pluralité de valeurs (AZsn) représentatives de la dérivée de l'impédance (Zs) par rapport au temps pendant la première phase d'essai et des moyens (F21) de comparaison desdits signes à des successions prédéterminées de signes représentatives des courbes d'impédance des différents types de charge.

3. Dispositif selon la revendication 2, caractérisé en ce que ladite pluralité de valeurs est égale à 4.

4. Dispositif selon l'une quelconque des revendications 1 à 3, caractérisé en ce que les moyens de détection de défaut comportent des moyens (F22) de détection d'une surcharge comportant des moyens (F25) d'estimation de la puissance nominale de la charge (Pestimée) adaptés au type de charge détectée, des moyens (F26) de comparaison de la puissance nominale estimée à un seuil de puissance prédéterminé (Pseuil), représentatif de la puissance disponible en sortie du dispositif, et des moyens (F8) de signalisation d'une surcharge si la puissance nominale estimée excède le seuil de puissance.

5. Dispositif selon la revendication 4, caractérisé en ce que, le type de charge détecté étant constitué par un convecteur ou une ampoule à incandescence, les moyens d'estimation de la puissance nominale de la charge comportent (figs 14 et 15) des moyens (F27,F29) de mesure de la résistance à froid (R, Rf) de la charge au début de la première phase d'essai ou pendant une seconde phase d'essai, pendant laquelle les moyens de contrôle (7) ferment temporairement l'interrupteur électronique (6,12) de manière à appliquer à la charge (5) la tension alternative du réseau pendant une durée limitée du cycle de la tension du réseau, de manière à ce que la tension instantanée appliquée à la charge reste inférieure à une tension pic (Vp) prédéterminée très inférieure à la tension crête du réseau.

6. Dispositif selon la revendication 4, caractérisé en ce que, le type de charge détecté étant une lampe fluorescente, les moyens d'estimation de la puissance nominale comportent (fig 16) des moyens (F32) de mesure de l'impédance à froid (Zf)) de la charge pendant une seconde phase d'essai pendant laquelle les moyens de contrôle (7) ferment temporairement l'interrupteur électronique (6,12) de manière à appliquer à la charge (5) la tension alternative du réseau pendant une durée limitée du cycle de la tension du réseau, de manière à ce que la tension instantanée appliquée à la charge reste inférieure à une tension pic (Vp) prédéterminée très inférieure à la tension crête du réseau.

7. Dispositif selon la revendication 4, caractérisé en ce que, le type de charge détecté étant un moteur ou une alimentation à découpage, les moyens d'estimation de la puissance nominale comportent (fig 17) des moyens (F34,F35) d'estimation de la puissance nominale minimale pendant la première période d'essai, les moyens de détection d'une surcharge comparant la puissance nominale minimale estimée (Pestimée (min)) au seuil de puissance (Pseuil) et produisant un signal de surcharge si ledit seuil de puissance est inférieur à la puissance nominale minimale estimée.

8. Dispositif selon l'une quelconque des revendications 1 à 7, caractérisé en ce que les moyens de détection de défaut comportent des moyens (F5-F7) de détection de court-circuit comportant des moyens (F7) de comparaison à un seuil de courant (Isseuil) prédéterminé du courant (Is) mesuré dans la charge pendant une seconde phase d'essai, pendant laquelle les moyens de contrôle (7) ferment temporairement l'interrupteur électronique (6,12) de manière à appliquer à la charge (5) la tension alternative du réseau pendant une durée limitée du cycle de la tension du réseau, de manière à ce que la tension instantanée appliquée à la charge reste inférieure à une tension pic (Vp) prédéterminée très inférieure à la tension crête du réseau, et des moyens (F8) de signalisation d'un court-circuit si le courant mesuré excède ledit seuil de courant.

9. Dispositif selon l'une quelconque des revendications 1 à 8, caractérisé en ce que les moyens de détection de défaut comportent des moyens de détection d'un défaut différentiel comportant des moyens (11) de mesure du courant différentiel (Id) dans la charge pendant une seconde phase d'essai pendant laquelle les moyens de contrôle (7) ferment temporairement l'interrupteur électronique (6,12) de manière à appliquer à la charge (5) la tension alternative du réseau pendant une durée limitée du cycle de la tension du réseau, de manière à ce que la tension instantanée appliquée à la charge reste inférieure à une tension pic (Vp) prédéterminée très inférieure à la tension crête du réseau, des moyens (F11) de comparaison du courant différentiel à un seuil de courant différentiel (Idseuil) prédéterminé, et des moyens (F8) de signalisation d'un défaut différentiel si le courant différentiel mesuré excède le seuil de courant différentiel.

10. Dispositif selon l'une quelconque des revendications 1 à 9, caractérisé en ce qu'il comporte des moyens de mise en service de la charge (5) comportant un second interrupteur (8) connecté, en série avec une résistance (R1) de forte valeur, en parallèle sur le premier interrupteur, des moyens (7,F2) de fermeture du second interrupteur (8) pendant une phase d'essai préalable pendant laquelle le premier interrupteur est ouvert (A1=0), des moyens (F4) de comparaison de la tension (Vs) de sortie du premier interrupteur à un seuil de tension prédéterminé (Vsseuil), les moyens de contrôle (7) effectuant la détection du type de charge et la détection de défaut (sortie oui de F4) si la tension (Vs) de sortie pendant la phase d'essai préalable est inférieure ou égale audit seuil de tension (Vsseuil).

**11.** Dispositif selon la revendication 10, caractérisé en ce que le premier interrupteur comporte un interrupteur mécanique (10), l'interrupteur électronique (6,12) étant connecté, en série avec une résistance de protection (R2) de faible valeur, en parallèle sur l'interrupteur mécanique (10).

**12.** Dispositif selon la revendication 10, caractérisé en ce que le premier interrupteur compte un interrupteur mécanique (10), l'interrupteur électronique (6,12) étant connecté, en série avec une résistance de protection (R2) de faible valeur, en parallèle sur ladite résistance (R1) de forte valeur.

**13.** Dispositif selon l'une quelconque des revendications 1 à 12, caractérisé en ce que les moyens de contrôle (7) réalisent (F23) une fermeture progressive du premier interrupteur adapté au type de charge détecté lorsqu'aucun défaut n'a été détecté.

Fig. 1

Fig. 2

Fig. 3

Fig. 4

Fig. 6

F1 — Initialisation

F2 — A2= 1  A1= 0

F3 — Mesure Vs

F4 — Vs ≤ Vsseuil ?  Non

F5 — A1= 1 avec déphasage  φ  A2= 0

F6 — Mesure Is

F7 — Is ≤ Isseuil ?  Non

F9 — Mesure Id

F10 — Calcul Idnom

F11 — Idnom ≤ Idseuil ?  Non

F12 — Fermeture triac sur 1 alternance

F13 — Identification charge

F22 — Surcharge ?  Oui

F23 — Démarrage progressif

F24 — Fonctionnement permanent

F8 — Signalisation défaut

Oui

**Fig. 5**

Fig. 7

Fig. 8a

Fig. 8b

Fig. 9a

Fig. 9b

Fig. 10a

Fig. 10b

Fig. 10c

Fig. 10d

Z_ampoule

Fig. 11a

Z_convecteur

Vr

Fig. 11b

Z_moteur

Fig. 11c

Z_néon

Fig. 11d

Z_alim.

Fig. 11e

t0    t1    t2    t3    t4

Identification
de charge

F14 ～ | n= 0 |

F15 ～ | Mesure<br>Vsn, Isn |

F18

| n= n+1 |

F16 ～ | Zsn= Vsn / Isn |

F17 ～ ◇ n= 4 ?

Non

Oui

F19 ～ | $\Delta Zsn = Zsn - Zs(n-1)$ |

F20 ～ | Détermination des signes de<br>$\Delta Zsn$, n= 1 à 4 |

F21 ～ | Comparaison des signes de<br>$\Delta Zsn$ à valeurs mémorisées |

**Fig. 12**

F25 ⁓ [ Calcul Pestimée ]

F26 ⁓ ⟨ Pestimée > Pseuil ? ⟩ — Oui →

Non ↓

**Fig. 13**

( Calcul Pestimée Convecteur )

F27 ⁓ [ Calcul de R à partir des mesures en F6 ou F15 ]

F28 ⁓ [ Pestimée= Vr² / R ]

**Fig. 14**

Calcul Pestimée
Ampoule à
Incandescence

F29 —| Calcul de Rf à partir des
mesures en F6 ou F15

F30 —| $Pf = Vr^2 / Rf$

F31 —| Pestimée= Pf / 13

## Fig. 15

Calcul Pestimée
Lampe
fluorescente

F32 —| Calcul de Zf à partir des
mesures en F6

F33 —| $Pestimée = Vr^2 / Zf$

## Fig. 16

Calcul Pestimée
Moteur ou Alimentation
à découpage

F34 ~ Calcul de lappel
à partir des mesures en F15

F35 ~ Calcul Pestimée(min)

## Fig. 17

Office européen
des brevets

**RAPPORT DE RECHERCHE EUROPEENNE**

Numéro de la demande

EP 97 41 0095

| **DOCUMENTS CONSIDERES COMME PERTINENTS** | | | |
|---|---|---|---|
| Catégorie | Citation du document avec indication, en cas de besoin, des parties pertinentes | Revendication concernée | CLASSEMENT DE LA DEMANDE (Int.Cl.6) |
| D,A | EP 0 581 078 A (GEWISS SPA) 2 février 1994 * le document en entier * | 1-13 | H02J13/00 |
| A | HART G W: "NONINTRUSIVE APPLIANCE LOAD MONITORING" PROCEEDINGS OF THE IEEE. vol. 80, no. 12, 1 décembre 1992. pages 1870-1891, XP000336363 * page 1875, colonne de droite, dernier alinéa - page 1879, colonne de droite, alinéa 2; figure 6 * | 1-13 | |
| A | WO 95 06349 A (METAL MANUFACTURES LTD :GRIFFITHS GREGORY MARK (AU); GIBBONS ERIC) 2 mars 1995 * page 15 - page 16 * | 1-13 | |
| | | | **DOMAINES TECHNIQUES RECHERCHES (Int.Cl.6)** |
| | | | H02J |

Le présent rapport a été établi pour toutes les revendications

| Lieu de la recherche | Date d'achèvement de la recherche | Examinateur |
|---|---|---|
| LA HAYE | 6 novembre 1997 | Moyle, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant